# EUROPEAN PATENT SPECIFICATION

(11) **EP 2 053 317 B1**
(45) Date of publication and mention of the grant of the patent: **30.03.2016**
(21) Application number: 07791850.6
(22) Date of filing: 02.08.2007
(51) Int. Cl.: F24F 12/00

(54) **VENTILATING DEVICE**
LÜFTUNGSVORRICHTUNG
MÉCANISME DE VENTILATION

(30) Priority: 11.08.2006 JP 2006220331; 11.08.2006 JP 2006220327
(43) Date of publication of application: 29.04.2009
(73) Proprietor: Daikin Industries, Ltd., Osaka-shi, Osaka 530-8323 (JP)
(72) Inventor: MATSUGI, Yoshitaka, Sakai-shi, Osaka 591-8511 (JP); NISHIDA, Takahiko, Sakai-shi, Osaka 591-8511 (JP); OKUMURA, Yasunobu, Sakai-shi, Osaka 591-8511 (JP); TAKEUCHI, Nobumasa, Sakai-shi, Osaka 591-8511 (JP)
(74) Representative: Goddar, Heinz J.
(86) International application number: PCT/JP2007/065170
(87) International publication number: WO 2008/018361

(56) References cited:
- EP-A1- 0 928 932
- CA-A1- 2 492 294
- JP-A- 04 270 842
- JP-A- 07 233 973
- JP-A- 07 332 727
- JP-A- 62 293 032
- US-A- 5 632 334
- US-A1- 2006 052 048

## Description

### TECHNICAL FIELD

The present invention generally relates to a ventilating device which is configured to supply outdoor air into a room while discharging indoor air to outside the room and which is provided with a heat exchange element for effecting heat exchange between the outdoor air and the indoor air.

### BACKGROUND ART

Ventilating devices provided with heat exchange elements have been known in the art. One such ventilating device is disclosed in JP-A-H06(1994)-257817 which is hereinafter referred to as the "patent document". The ventilating device of the patent document is configured such that it supplies outdoor air into a room while discharging indoor air to outside the room. In this case, the outdoor air being delivered into the room and the indoor air being discharged to outside the room each pass through a heat exchange element. The heat exchange element constitutes a crossflow type heat exchanger in which the direction in which the outdoor air passes through the heat exchange element and the direction in which the indoor air passes through the heat exchange element are orthogonal to each other. And in the heat exchange element, heat is exchanged between the outdoor air and the indoor air. In addition, in the heat exchange element, moisture, too, is transferred between the outdoor air and the indoor air.

US 5 632 334 discloses a ventilating device upon which the preamble of appending claim 1 is based.

Incidentally, the ventilating device of the patent document is a so-called ceiling embedded type. That is, the ventilating device of the patent document has a casing which is placed in a space under the roof of a building. A side plate of the casing is provided with an outdoor inlet opening through which the outdoor air is introduced into the casing, an indoor inlet opening through which the indoor air is introduced into the casing, an indoor air supply opening through which the outdoor air after treatment is supplied into the room and an outdoor air exhaust opening through which the indoor air after treatment is exhausted to outside the room. These suction, air supply and air exhaust openings are connected respectively to ducts which open to the indoor and outdoor spaces.

### DISCLOSURE OF THE INVENTION

### PROBLEMS THAT THE INVENTION INTENDS TO OVERCOME

However, in the case where (as disclosed in the patent document) the ventilating device is placed in a space under the roof of a building, its maintenance becomes troublesome. More specifically, for the case of a ventilating device of the ceiling-embedded type, the user has to use a stepladder or the like, for example, when cleaning a filter or replacing it with a new one from the ceiling side. In addition, when maintaining a component of the ventilating device, such as a heat exchange element and an electric component, the user is also required to either make his/her access way around to the space under the roof or temporarily detach the ventilating device from where it is installed.

On the other hand, it is conceivable that the ventilating device of the patent document may be installed in an indoor space so that it serves as a ventilating device of the so-called floor type. In this case, however, ducts are connected respectively to suction, air supply and air exhaust openings formed in a side surface of the casing. This makes it necessary to ensure a sufficient space for the installation of the ducts, and the ventilating device is constrained in the installation location.

In light of the above drawbacks, the present invention was made. Accordingly, a general object of the invention is to provide a ventilating device which allows easy maintenance and which is superior in installability.

### MEANS FOR OVERCOMING THE PROBLEMS

The invention provides a ventilating device which comprises a casing (10) in which are formed an air supply passageway for establishing connection of an outdoor inlet opening (21) and an indoor air supply opening (23), and an air exhaust passageway for establishing connection of an indoor inlet opening (22) and an outdoor air exhaust opening (24), and a heat exchange element (61, 62) which is housed within the casing (10) for effecting heat exchange between outdoor air flowing through the air supply passageway and indoor air flowing through the air exhaust passageway. And the ventilating device of the second aspect is characterized in that the outdoor inlet opening (21), the indoor air supply opening (23), the indoor inlet opening (22) and the outdoor air exhaust opening (24) are formed in an upper section of the casing (10). It should be noted that what is meant by the use of the term "casing upper section" herein is that it includes not only a casing top surface but also casing side surface locations adjacent to the casing upper section.

In the invention, the air supply passageway and the air exhaust passageway are formed within the casing (10) of the ventilating device. When the ventilating device is in operation, outdoor air is introduced through the outdoor inlet opening (21) into the air supply passageway while indoor air is introduced through the indoor inlet opening (22) into the air exhaust passageway. The outdoor air flowing through the air supply passageway and the indoor air flowing through the air exhaust passageway each pass through the heat exchange element (61, 62). In the heat exchange element (61, 62), heat is exchanged between the indoor air and the outdoor air. After having been treated in the heat exchange element (61, 62), the outdoor air is then supplied through the indoor air supply opening (23) into the room. On the other hand, after having been treated in the heat exchange element (61, 62), the indoor air is then discharged outdoors through the outdoor air exhaust opening (24). In the way as described above, with the ventilating device according to the first aspect, the room is ventilated while at the same time being air conditioned.

In the ventilating device of the invention, the outdoor inlet opening (21), the indoor inlet opening (22), the indoor air supply opening (23) and the outdoor air exhaust opening (24) are all provided in the upper section of the casing (10). That is, in the invention, the inlet openings (21, 22) and the air supply and exhaust openings (23, 24) are all gathered at the upper section of the casing (10). As a result of such arrangement, even when the ventilating device is installed on the indoor floor, the space necessary for the installation of the ventilating device can be kept to a minimum by the arrangement that the ducts, which are connected respectively to the inlet openings (21, 22) and the air supply and exhaust openings (23, 24), are extended in the direction of the ceiling.

The invention provides, as a second aspect according to the first aspect, a ventilating device that is characterized as follows: the outdoor inlet opening (21), the indoor air supply opening (23), the indoor inlet opening (22) and the outdoor air exhaust opening (24) are formed in a top surface of the casing.

In the second aspect of the invention, the outdoor inlet opening (21), the indoor inlet opening (22), the indoor air supply opening (23) and the outdoor air exhaust opening (24) are all provided in the top surface of the casing (10). That is, in the second aspect of the invention, the inlet openings (21,22) and the air supply and exhaust openings (23, 24) are all gathered in the top surface of the casing (10). As a result of such arrangement, even when the ventilating device is installed on the indoor floor, the space necessary for the installation of the ventilating device can be reduced to a further extent by the arrangement that the ducts, which are connected respectively to the inlet openings (21, 22) and the air supply and exhaust openings (23, 24), are extended in the direction of the ceiling. In this case, there is no need to arrange any duct on the side of the side surfaces of the casing, whereby the ventilating device can be housed within a small space such as a closet or the like.

The invention provides, as a third aspect according to either the first or second aspect, a ventilating device that is characterized as follows: (a) in the casing (10), a front face panel (12) formed on the front of the casing (10) is rendered removable and (b) the heat exchange element (61, 62) is arranged such that it becomes exposed to outside of the casing (10) when the front face panel (12) is removed.

In the third aspect of the invention, the front face panel (12) on the front of the casing (10) is rendered detachable from the body of the casing (10). And, when the front face panel (12) is removed, the heat exchange element (61, 62) is placed in an exposed state to the outside of the casing (10). Consequently, even when the ventilating device is installed on the floor, the maintenance of the heat exchange element (61, 62) can be carried out easily by removal of the front face panel (12).

The invention provides, as a fourth aspect according to either the first or second aspect, a ventilating device that is characterized as follows: (a) the ventilating device includes a filter (71) for capture of dust particles contained in the air flowing through either the air supply passageway or the air exhaust passageway, (b) in the casing (10), a front face panel (12) formed on the front of the casing (10) is rendered removable and (c) the filter (71) is arranged such that it becomes exposed to outside of the casing (10) when the front face panel (12) is removed.

In the fourth aspect of the invention, either the air supply passageway or the air exhaust passageway is provided with the filter (71). The filter (71) captures dust particles contained in the outdoor air flowing through the air supply passageway or dust particles contained in the indoor air flowing through the air exhaust passageway. Here, in the fourth aspect of the invention, the filter (71) is placed in an exposed state when the front face panel (12) is removed. Because of this, even if the ventilating device is installed on the floor, the maintenance and the replacement of the filter (71) can be facilitated by removal of the front face panel (12).

The invention provides, as a fifth aspect according to the fourth aspect, a ventilating device that is characterized as follows: in the air supply passageway, the filter (71) is arranged upstream of the heat exchange element (61, 62).

In the fifth aspect of the invention, in the air supply passageway, the filter (71) is arranged upstream of the heat exchange element (61, 62). That is, the filter (71) of the fifth aspect of the invention captures dust particles contained in the outdoor air before inflow to the heat exchange element (61, 62). As a result, it can be prevented that dust particles contained in the outdoor air adhere to the heat exchange element (61, 62).

The invention provides, as a sixth aspect according to the fifth aspect, a ventilating device that is characterized as follows: (a) the heat exchange element (61, 62) is constructed such that the air in the air supply passageway flows upwardly across the heat exchange element (61, 62) and (b) the filter (71) is arranged underneath the heat exchange element (61).

In the sixth aspect of the invention, the outdoor air flowing through the air supply passageway first passes through the filter (71) mounted underneath the heat exchange element (61, 62). The filter (71) removes dust particles contained in the outdoor air. Thereafter, the outdoor air flows upwardly across the heat exchange element (61, 62). Here, it is arranged such that the outdoor air vertically upwardly flows through the heat exchange element (61, 62), thereby giving rise to the possibility that dust particles of relatively small diameter that have escaped capture in the filter (71) may adhere to the lower side of the heat exchange element (61, 62). In the sixth aspect of the invention, however, such dust particles adhering to the lower side of the heat exchange element (61, 62) can be forced to fall down onto the upper surface of the filter (71) by stopping the supply of outdoor air to the heat exchange element (61, 62).

In addition, in the sixth aspect of the invention, the filter (71) is arranged underneath the heat exchange element (61, 62). Because of this arrangement, even when dust particles or the like captured in the filter (71) peel off therefrom during replacement of the filter (71), no dust will adhere to the heat exchange element (61, 62).

The invention provides, as a seventh aspect according to either the first or second aspect, a ventilating device that is characterized as follows: (a) the ventilating device includes an electric component box (72) in which to accommodate electric components, (b) in the casing (10), a front face panel (12) formed on the front of the casing (10) is rendered removable and (c) the electric component box (72) is arranged such that it becomes exposed to outside of the casing (10) when the front face panel (12) is removed.

In the seventh aspect of the invention, the electric components necessary for the operation of the ventilating device are housed in the electric component box (72). Here, in the seventh aspect of the invention, the electric component box (72) is placed in an exposed state to the outside of the casing (10) when the front face panel (12) is removed. Because of this, even when the ventilating device is installed on the floor, the maintenance and the replacement of the electric component box (72) can be facilitated by removal of the front face panel (12).

The invention provides, as an eighth aspect according to the seventh aspect, a ventilating device that is characterized as follows: the electric component box (72) is mounted in the upper section of the casing (10).

In the eighth aspect of the invention, the electric component box (72) is provided in the upper section of the casing (10). Hence, even if moisture enters any air passageway within the casing (10) for some reason (e.g., such as faulty workmanship in the construction), it will accumulate in the lower section of the casing (10). Accordingly, it can be avoided that the area around the electric component box (72) is placed in a wet state.

The invention provides, as a ninth aspect according to either the first or second aspect, a ventilating device that is characterized as follows: (a) the ventilating device includes an air supply fan (73) for conveyance of the air flowing through the air supply passageway and an air exhaust fan (74) for conveyance of the air flowing through the air exhaust passageway and (b) the air supply fan (73) and the air exhaust fan (74) are mounted in the upper section of the casing (10).

In the ninth aspect of the invention, both the air supply and exhaust fans (73, 74) for conveyance of air are arranged in the upper section of the casing (10). Since moisture which has entered the casing (10) will accumulate in the lower section of the casing (10), it can be prevented that the area around each fan (73, 74) is placed in a wet state.

The invention provides, as a tenth aspect according to either the first or second aspect, a ventilating device that is characterized as follows: (a) the ventilating device includes an air supply fan (73) for conveyance of the air flowing through the air supply passageway and an air exhaust fan (74) for conveyance of the air flowing through the air exhaust passageway, (b) in the air supply passageway, the air supply fan (73) is arranged downstream of the heat exchange element (61, 62) and (c) in the air exhaust passageway, the air exhaust fan (74) is arranged downstream of the heat exchange element (61, 62).

In the tenth aspect of the invention, the air supply fan (73) and the air exhaust fan (74) are each arranged downstream of the heat exchange element (61, 62). In other words, in the tenth aspect of the invention, the heat exchange element (61, 62) is positioned on the intake side of each fan (73,74). This allows outdoor and indoor air to more easily evenly be distributed throughout the entire area of the heat exchange element (61, 62), as compared to when the heat exchange element (61, 62) is located on the outlet side of each fan (73, 74).

The invention provides a ventilating device that is characterized as follows: (a) in the casing (10), a first passageway (52a) and a second passageway (54a) are so formed as to overlap with each other along one side surface of the casing (10), (b) the first passageway (52a) is formed on the side of the one side surface of the casing (10) and configured such that the outdoor air before entry into the heat exchange element (61, 62) flows therethrough and (c) the second passageway (54a) is formed on the inner side of the casing (10) and configured such that the indoor air after passage through heat exchange element (61, 62) flows therethrough.

In the invention, flows of outdoor and indoor air are drawn into the casing (10) and they flow through the heat exchange element (61, 62). In the heat exchange element (61, 62), heat is exchanged between the outdoor air and the indoor air.

Incidentally, in the case where a conventional type of ventilating device, such as one as shown in the patent document, is installed for operation in an indoor space, the effect of reduction in heating or cooling load by the ventilating device may be deteriorated for the following reasons.

For example, during the winter months, the indoor air, from which heat has been extracted in the heat exchange element, is discharged outdoors by way of the air exhaust passageway. Consequently, air (exhaust air) of relatively low temperature flows through the air exhaust passageway downstream of the heat exchange element. On the other hand, in the case where the ventilating device is installed indoors, the temperature around the casing, i.e., the room temperature, tends to be higher than the temperature of the exhaust air. As a result, heat in the room is transferred through the casing to the exhaust air and the exhaust air may be heated. This exhaust air is then discharged outdoors. That is, the heat supplied into the room by the ventilating device is after all discarded outdoors, thereby producing the problem of the increase in heating load in the winter months.

In addition, for example, in the summer months, the indoor air, to which heat has been transferred in the heat exchange element, is discharged outdoors by way of the air exhaust passageway. Consequently, exhaust air of relatively high temperature flows through the air exhaust passageway downstream of the heat exchange element. The room temperature around the casing of the ventilating device tends to be lower than the temperature of the exhaust air. This may causes the heat in the exhaust air to transfer through the casing to the room. As a result, the room temperature becomes higher, thereby producing the problem of the increase in cooling load in the summer months.

In the invention, the first passageway (52a) which is located upstream of the heat exchange element (61, 62) and through which the outdoor air flows and the second passageway (54a) which is located downstream of the heat exchange element (61, 62) and through which the indoor air flows are formed in the casing (10). Each passageway (52a, 54a) is defined so as to be located along one side surface of the casing (10). More specifically, the first passageway (52a) is located nearer to the one side surface (outside) of the casing (10) while the second passageway (54a) is located nearer to the inside of the casing (10). That is, the first passageway (52a) is adjacent through the one side surface of the casing (10) to the room. On the other hand, the second passageway (54a) lies adjacent to the first passageway (52a), but it does not lie adjacent to the one side surface of the casing (10). The first passageway (52a) and the second passageway (54a) are formed within the casing (10) in the arrangement as just described above, whereby, as will be described below, it can be prevented that the heating or cooling load of the room increases.

For example, in the winter months, heat is exchanged between the outdoor air of relatively low temperature and the indoor air of relatively high temperature in the heat exchange element (61, 62). In other words, the heat in the indoor air is transferred to the outdoor air. The outdoor air, heated because of heat extraction from the indoor air, is supplied into the room. On the other hand, the indoor air, which has given up its heat to the outdoor air, is discharged outdoors by way of the second passageway (54a).

Here, in the invention, the second passageway (54a) is not located adjacent to the one side surface of the casing (10). Consequently, the transfer of heat in the room through the casing (10) to the air (exhaust air) flowing through the second passageway (54a) is reduced. On the other hand, the second passageway (54a) is located adjacent to the first passageway (52a) through which is flowing the outdoor air of relatively low temperature. Consequently, the heat in the exhaust air is given to the outdoor air in the first passageway (52a). That is, in the invention, the heat in the exhaust air is recovered into the outdoor air flowing through the first passageway (52a).

In addition, for example, in the summer months, heat is exchanged between the outdoor air of relatively high temperature and the indoor air of relatively low temperature. In other words, the heat in the outdoor air is transferred to the indoor air. The outdoor air, cooled because of heat dissipation to the indoor air, is supplied into the room. On the other hand, the indoor air after heat extraction from the outdoor air is discharged outdoors by way of the second passageway (54a).

Here, in the invention, the second passageway (54a) is not located adjacent to the one side surface of the casing (10). Consequently, the emission of heat in the air (exhaust air) flowing through the second passageway (54a) to the indoor space through the casing (10) is reduced. On the other hand, the second passageway (54a) is located adjacent to the first passageway (52a) through which is flowing the outdoor air of relatively high temperature. Consequently, the outdoor air flowing through the first passageway (52a) gives up heat to the exhaust air flowing through the second passageway (54a). That is, in the invention, the cold heat in the exhaust air is recovered into the outdoor air flowing through the first passageway (52a).

The invention provides, as a twelfth aspect a ventilating device that is characterized as follows: (a) the casing (10) contains the heat exchange element (61, 62) which is comprised of a first heat exchange element (61) and a second heat exchange element (62), (b) in the casing (10), a third passageway (55a) is so formed as to overlap with the second passageway (54a) and (c) the third passageway (55a) is configured such that the indoor air after passage through the first heat exchange element (61) but before entry to the second heat exchange element (62) flows therethrough.

In the twelfth aspect of the invention, the first heat exchange element (61) and the second heat exchange element (62) are provided as a heat exchange element for heat exchange between the outdoor air and the indoor air. The indoor air drawn into the casing (10) undergoes heat exchange in the first heat exchange element (61), flows through the third passageway (55a) and undergoes another heat exchange in the second heat exchange element (62).

Here, in the twelfth aspect of the invention, the third passageway (55a) is formed such that it is located adjacent to the second passageway (54a). As a result of such arrangement, the transfer of heat between the exhaust air flowing through the second passageway (54a) and the outdoor air flowing through the third passageway (55a) can be reduced to a minimum.

More specifically, for example, in the winter months, the outdoor air of relatively high temperature gives up heat to the indoor air in the first heat exchange element (61). Consequently, air of lower temperature than that of the indoor air drawn into the casing (10) flows through the third passageway (55a). As a result of such arrangement, the amount of heat that is transferred from the indoor air flowing through the third passageway (55a) to the exhaust air flowing through the second passageway (54a) can be reduced when compared to the arrangement in which the indoor air before passage through the first heat exchange element (61) flows through the third passageway (55a). As a result, it become possible to diminish the amount of heat in the air that is discharged outdoors through the second passageway (54a).

In addition, for example, in the summer months, the outdoor air of relatively low temperature extracts heat from the indoor air in the first heat exchange element (61). Consequently, air of higher temperature than that of the indoor air drawn into the casing (10) flows through the third passageway (55a). As a result of such arrangement, the amount of heat that is transferred from the exhaust air flowing through the second passageway (54a) to the exhaust air flowing through the third passageway (55a) can be reduced when compared to the arrangement in which the indoor air before passage through the first heat exchange element (61) flows through the third passageway (55a). As a result, it become possible to reduce the amount of cold heat in the air that is discharged outdoors through the second passageway (54a).

The invention provides, as a thirteenth aspect a ventilating device that is characterized as follows: the direction in which the outdoor air flows through the first passageway (52a) and the direction in which the indoor air flows through the second passageway (54a) are opposite to each other.

In the thirteenth aspect of the invention, the indoor air flowing through the second passageway (54a) and the outdoor air flowing through the first passageway (52a) are so-called opposed flows. This therefore enhances the efficiency of heat exchange between the air flowing through the passageway (52a) and the air flowing through the passageway (54a). As a result, in the winter months, the amount of heat that is recovered into the outdoor air flowing through the first passageway (52a) is increased while in the summer months the amount of cold heat that is recovered into the outdoor air flowing through the first passageway (52a) is increased.

### ADVANTAGEOUS EFFECTS OF THE INVENTION

In the invention, the outdoor inlet opening (21), the indoor inlet opening (22), the indoor air supply opening (23) and the outdoor air exhaust opening (24) are all formed in the upper section of the casing (10). As a result of such arrangement according to the invention, even when the ventilating device is installed on the floor, the ducts that are connected respectively to the inlet openings (21, 22) and the air supply and exhaust openings (23, 24) will not become obstructive in the indoor space if they are extended upwardly to the ceiling. This therefore enables the ventilating device of the invention to serve as a floor ventilating device capable of installation in a relatively small space. This also makes it possible to facilitate the maintenance of such a ventilating device installed on the floor, as compared, for example, to the ceiling-embedded type.

Especially, in the second aspect of the invention, the inlet openings (21, 22) and the air supply and exhaust openings (23, 24) are formed in the top surface of the casing (10). Therefore, in accordance with the second aspect of the invention, each duct can be extended straight from the top surface of the casing (10) towards the ceiling. Consequently, the installation space of each duct can be held as low as possible, whereby the ventilating device can compactly be installed in the indoor space.

In the third aspect of the invention, the heat exchange element (61, 62) is exposed to outside of the casing (10) by removal of the front face panel (12). Therefore, in accordance with the third aspect of the invention, the maintenance of the heat exchange element (61, 62), for example, by a maintenance service person or the like is facilitated by access from the room side.

In the fourth aspect of the invention, the filter (71) is exposed to outside of the casing (10) by removal of the front face panel (12). Therefore, in accordance with the fourth aspect of the invention, the maintenance of the filter (71), for example, by a user or the like, is facilitated by access from the room side.

In addition, in the fifth aspect of the invention, dust particles contained in the outdoor air flowing upstream of the heat exchange element (61, 62) are captured by the filter (71). Therefore, in accordance with the fifth aspect of the invention, it is effectively prevented that dust particles contained in the outdoor air adhere to the heat exchange element (61, 62).

Especially, in the sixth aspect of the invention, the filter (71) is arranged underneath the heat exchange element (61). Therefore, in accordance with the sixth aspect of the invention, dust particles, having escaped capture in the filter (71) and then adhered to the lower surface of the heat exchange element (61), can be captured in the upper surface of the filter (71). As a result, the air passageway below the heat exchange element (61) can be kept clean. In addition, the filter (71) is arranged underneath the heat exchange element (61), whereby, even when dust particles or the like peel off from the filter (71) at the time of replacement thereof, such dust particles will never adhere to the upper side of the heat exchange element (61).

In the seventh aspect of the invention, the electric component box (72) is exposed to outside of the casing (10) by removal of the front face panel (12). Therefore, in accordance with the seventh aspect of the invention, the maintenance of the electric component box (72), for example, by a maintenance service person or the like is facilitated by access from the room side.

Especially, in the eighth aspect of the invention, the electric component box (72) is mounted in the upper section of the casing (10). Therefore, in accordance with the eighth aspect of the invention, the area around the electric component box (72) can be prevented as much as possible from being placed in a wet state, thereby making it possible to prevent each electric component from electric failure.

In addition, in the ninth aspect of the invention, the air supply fan (73) and the air exhaust fan (74) are mounted in the upper section of the casing (10). Therefore, in accordance with the ninth aspect of the invention, the area around each fan (73, 74) can be prevented as much as possible from being placed in a wet state, thereby making it possible to prevent each fan (73, 74) from electric failure.

Especially, in the tenth aspect of the invention, the heat exchange element (61, 62) is arranged on the inlet side of each fan (73, 74). Therefore, in accordance with the tenth aspect of the invention, air is allowed to easily evenly flow throughout the entire area of the heat exchange element (61, 62), thereby making it possible to increase the efficiency of heat exchange between the outdoor air and the indoor air.

In the invention, the first passageway (52a) and the second passageway (54a) are formed in an overlapping arrangement along the one side surface of the casing (10), and the outdoor air upstream of the heat exchange element (61, 62) is made to flow through the first passageway (52a) on the side of the one side surface of the casing (10) while the indoor air downstream of the heat exchange element (61, 62) is made to flow through the second passageway (54a) on the inner side of the casing (10). Therefore, in accordance with the invention, the transfer of heat around the surrounding area of the casing (10) to the outdoor air flowing through the second passageway (54a) is avoided in the winter months, thereby making it possible to prevent the increase in heating load. In addition, the heat in the exhaust air flowing through the second passageway (54a) can be recovered into the outdoor air flowing through the first passageway (52a), thereby making it possible to accomplish a further reduction in heating load.

In addition, in accordance with the twelfth aspect of the invention, the transfer of heat in the exhaust air flowing through the second passageway (54a) to the indoor space around the surrounding area of the casing (10) is avoided in the summer months, thereby making it possible to prevent the increase in cooling load. In addition, the cold heat in the exhaust air flowing through the second passageway (54a) can be recovered into the outdoor air flowing through the first passageway (52a), thereby making it possible to accomplish a further reduction in cooling load.

In addition, in accordance with the twelfth aspect of the invention, the third passageway (55a) is formed such that it is located adjacent to the second passageway (54a), and the indoor air, having passed through the first heat exchange element (61), is delivered through the third passageway (55a). Therefore, in accordance with the twelfth aspect of the invention, the amount of heat transfer between the exhaust air flowing through the second passageway (54a) and the outdoor air flowing through the third passageway (55a) can be reduced as compared to, for example, when the indoor air before passage through the first heat exchange element (61) is delivered through the third passageway (55a), thereby making it possible to prevent the increase in heating or cooling load caused by such a transfer of heat.

Furthermore, in accordance with the thirteenth aspect of the invention, the outdoor air flowing through the first passageway (52a) and the exhaust air flowing through the second passageway (54a) are opposed flows, thereby making it possible to enhance the efficiency of heat exchange between the outdoor air and the exhaust air. Therefore, in accordance with the thirteenth aspect of the invention, the heating load is further reduced in the winter months while on the other hand the cooling load is further reduced in the summer months.

### BRIEF DESCRIPTION OF THE DRAWINGS

FIG. 1 is a schematic perspective view showing an exterior appearance of a ventilating device according to an embodiment of the invention.
FIG. 2 is a schematic perspective view showing an inner front face side of the ventilating device.
FIG. 3 is a schematic perspective view showing an inner structure of the ventilating device, with omission of the diagrammatic representation of an air supply fan and an air exhaust fan.
FIG. 4 is a schematic perspective view showing an inner structure of the ventilating device, with omission of the diagrammatic representation of a casing upper section, a front face panel, a fourth member, a fifth member, a first heat exchange element and a second heat exchange element.
FIG. 5 is a schematic perspective view showing an inner structure of the ventilating device, with omission of the diagrammatic representation of an air supply fan, an air exhaust fan, a front face panel, a fifth member, a first heat exchange element and a second heat exchange element.
FIG. 6 is a schematic perspective view showing an inner structure of the ventilating device, with omission of the diagrammatic representation of an air supply fan, an air exhaust fan, a front face panel, a first heat exchange element and a second heat exchange element.
FIG. 7 is a schematic perspective view of the first and second heat exchange elements.
FIG. 8 is comprised of FIG. 8(A) and FIG. 8(B), wherein FIG. 8(A) is a vertical cross-sectional view of a left-hand section of the ventilating device while FIG. 8(B) is a vertical cross-sectional view of a right-hand section of the ventilating device.
FIG. 9 is a schematic perspective view showing an installation example of the ventilating device.
FIG. 10 is comprised of FIG. 10(A) and FIG. 10(B), wherein FIG. 10(A) provides an indication of the flow direction of air during the heat exchange ventilation operation with respect to FIG. 8(A) while FIG. 10(B) provides an indication of the flow direction of air during the heat exchange ventilation operation with respect to FIG. 8(B).
FIG. 11 is comprised of FIG. 11 (A) and FIG. 11(B), wherein FIG. 11 (A) provides an indication of the flow direction of air during the regular ventilation operation with respect to FIG. 8(A) while FIG. 11(B) provides an indication of the flow direction of air during the regular ventilation operation with respect to FIG. 8(B).

### REFERENCE NUMERALS IN THE DRAWINGS

1 ventilating device
10 casing
12 front face panel
21 outdoor inlet opening
22 indoor inlet opening
23 indoor air supply opening
24 outdoor air exhaust opening
61 first heat exchange element (heat exchange element)
62 second heat exchange element (heat exchange element)
71 filter (filter member)
72 electric component box
73 air supply fan
74 air exhaust fan

### BEST MODE FOR CARRYING OUT THE INVENTION

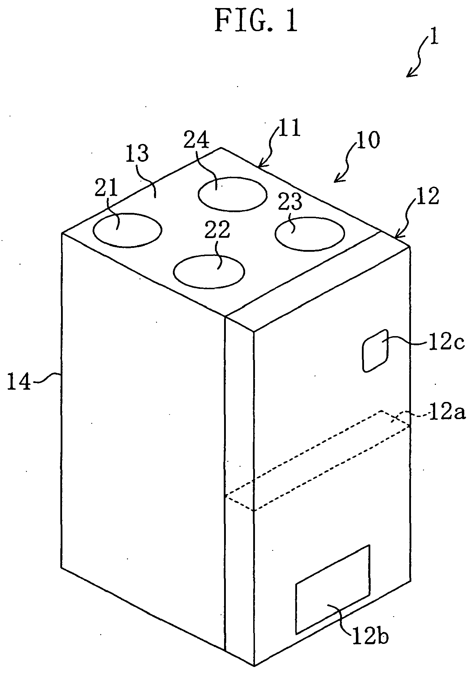

In the following, an embodiment of the present invention will be described in detail with reference to the accompanying drawing figures. The following description will use "right", "left", "upper", "lower", "front", "rear" et cetera. These terms should be understood relative to the orientation shown in FIG. 1, unless otherwise indicated.

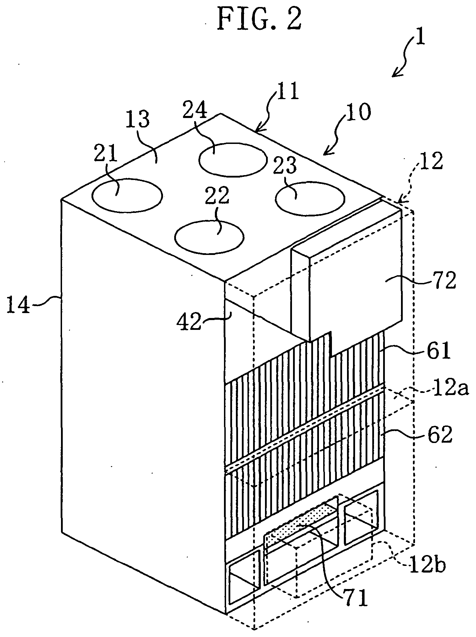

Referring first to FIGS. 1-9, the arrangement of a ventilating device (1) of the present embodiment will be described. The ventilating device (1) of the present embodiment constitutes a so-called "floor type" ventilating device for installation on a room floor. As shown in FIGS. 1 and 2, the ventilating device (1) includes a casing (10) shaped like a vertically-elongated rectangular parallelepiped. The casing (10) has a casing main body (11) with an open front and a front face panel (12) which is removably mounted around the open front of the casing main body (11).

The casing main body (11) has at its upper section a top face plate (13) behind which is positioned a rear face plate (14). The top face plate (13) is provided with an outdoor inlet opening (21), an indoor inlet opening (22), an indoor air supply opening (23) and an outdoor air exhaust opening (24). More specifically, the outdoor inlet opening (21), the indoor inlet opening (22), the indoor air supply opening (23) and the outdoor air exhaust opening (24) are formed near the left rear corner, near the left front corner, near the right front corner and near the right rear corner of the top face plate (13), respectively.

The front face panel (12) is shaped like a box with an open rear side. With the front face panel (12) mounted to the casing main body (11), there is formed behind the front face panel (12) a rectangular internal space (see FIG. 2).

The front face panel (12) includes a front face panel partition plate (12a), a closing member (12b) and a console part (12c). The front face panel partition plate (12a) is mounted inside the front face panel (12). The front face panel partition plate (12a) divides the internal space of the front face panel (12) into an upper space and a lower space. The closing member (12b) is mounted in a lower section of the front face panel (12). The closing member (12b) is constructed such that it is removable from the front face panel (12). That is, the closing member (12b) can be removed, as a separate member from the front face panel (12), from the casing (10). The console part (12c) is formed at an upper part of the front surface of the front face panel (12). The console part (12c) is provided with switches such as a switch to control the operation of the ventilating device (1).

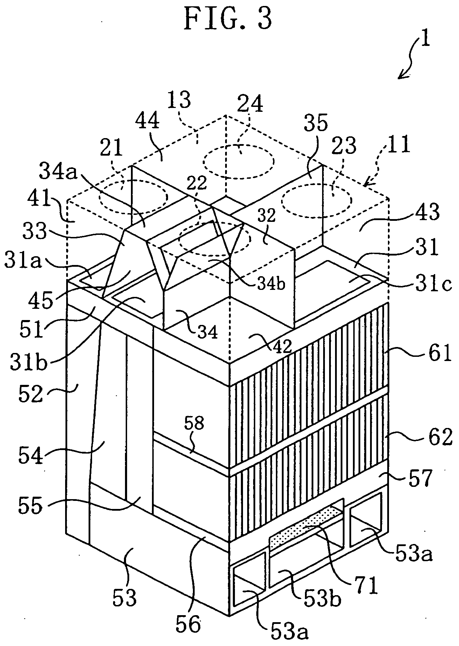

As can be seen from FIG. 3, in the casing main body (11) there is mounted near the top a first partition plate (31). The first partition plate (31) divides the internal space of the casing main body (11) into two spaces, namely an upper space and a lower space. Of these two spaces, the upper one is provided with a second partition plate (32) which extends in a back and forth direction. The second partition plate (32) divides the upper space into two spaces, namely a right-hand space and a left-hand space. Of these two spaces, the left-hand one is provided with a third partition plate (33) and a fourth partition plate (34), and the right-hand one is provided with a fifth partition plate (35).

Behind the third partition plate (33) there is formed an outdoor inlet passageway (41). The outdoor inlet passageway (41) is in fluid communication with the outdoor inlet opening (21). In front of the fourth partition plate (34) there is formed an indoor inlet passageway (42). The indoor inlet passageway (42) is in fluid communication with the indoor inlet opening (22). In addition, the indoor inlet passageway (42) is in fluid communication with the upper space within the front face panel (12) (see FIG. 2). In front of the fifth partition plate (35) there is formed an indoor air supply passageway (43). The indoor air supply passageway (43) is in fluid communication with the indoor air supply opening (23). In addition, the indoor air supply passageway (43) is separated by a partition plate (not shown) from the upper space within the front face panel (12). Behind the fifth partition plate (35) there is formed an outdoor air exhaust passageway (44). The outdoor air exhaust passageway (44) is in fluid communication with the outdoor air exhaust opening (24).

Between the third partition plate (33) and the fourth partition plate (34) there is formed a bypass passageway (45). Through a bypass introduction opening (34a) formed in the fourth partition plate (34), the bypass passageway (45) is in fluid communication with the indoor inlet passageway (42). In addition, the fourth partition plate (34) is provided with a switching damper (34b) capable of selectively placing the bypass introduction opening (34a) in the opened or closed state.

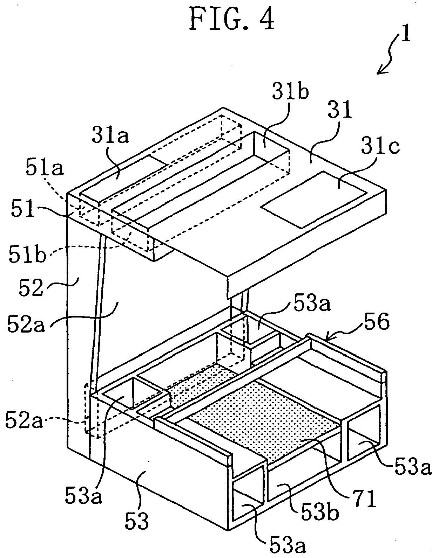

As can be seen from FIGS. 3 and 4, the first partition plate (31) is provided with a first communication opening (31a), a second communication opening (31b) and a third communication opening (31c). The first communication opening (31a) opens to the outdoor inlet passageway (41). The second communication opening (31b), extending astride the bypass passageway (45) and the outdoor air exhaust passageway (44), opens to both the passageways (44, 45). The third communication opening (31c) opens to the indoor air supply passageway (43). In addition, the first partition plate (31) has a downwardly-curved front end surface.

Under the first partition plate (31) there are formed first to fifth members (51, 52, 53, 54, 55) and first to second heat exchange elements (61, 62) (see, for example, FIG. 3).

As shown in FIG. 4, the first member (51) has a laterally-elongated shape corresponding to that of nearly a rear-half portion of the first partition plate (31). The first member (51) is provided with an upper air supply passageway (51a) on the rear side and an upper air exhaust passageway (51b) on the front side. The upper air supply passageway (51a) is in fluid communication through the first communication opening (31a) with the outdoor inlet passageway (41). The upper air exhaust passageway (51b) is in fluid communication through the second communication opening (31b) with the outdoor air exhaust passageway (44) and with the bypass passageway (45).

The second member (52) is mounted under the first member (51) and nearest to the rear of the casing (10). The second member (52) has a squared U-shape in horizontal cross-section with an open front. And, inside the second member (52) there is formed an intermediate air supply passageway (52a) which extends in a vertical direction. The intermediate air supply passageway (52a) is in fluid communication with the upper air supply passageway (51a).

The intermediate air supply passageway (52a) is formed along the rear face plate (14) which is one of the side surfaces of the casing main body (11). The intermediate air supply passageway (52a) is a first passageway and is configured such that the outdoor air before passage through each heat exchange element (61, 62) flows therethrough.

The third member (53) is mounted on the front of the bottom of the casing (10). The third member (53) defines lower air exhaust passageways (53a, 53a), respectively, on both right and left sides thereof. Each lower air exhaust passageway (53a, 53a) is so formed as to extend from its front end opening to its upper end opening on the rear side. In addition, the third member (53) further defines, between both the lower air exhaust passageways (53a, 53a), a lower air supply passageway (53b). The lower air supply passageway (53b) is in fluid communication with the intermediate air supply passageway (52a). In addition, the front end opening of the lower air supply passageway (53b) is shut off by the closing member (12b) of the front face panel (12) (see FIG. 2).

The third member (53) is provided, at its upper end, with a lower frame member (56). The lower frame member (56) is composed of a pair of rod-shaped guide parts extending along right and left-side ends of the third member (53) and a rod-shaped intermediate guide part extending sideways from the rear ends of the guide parts. The lower end of the second heat exchange element (62) is engaged inside the lower frame member (56). That is, the lower frame member (56) functions as a position determining member for the second heat exchange element (62). In addition, the lower frame member (56) serves also as a seal member for the air passing through the second heat exchange element (62). Furthermore, the lower frame member (56) is provided, at its front end, with a front guide plate (57) (see, for example, FIG. 3).

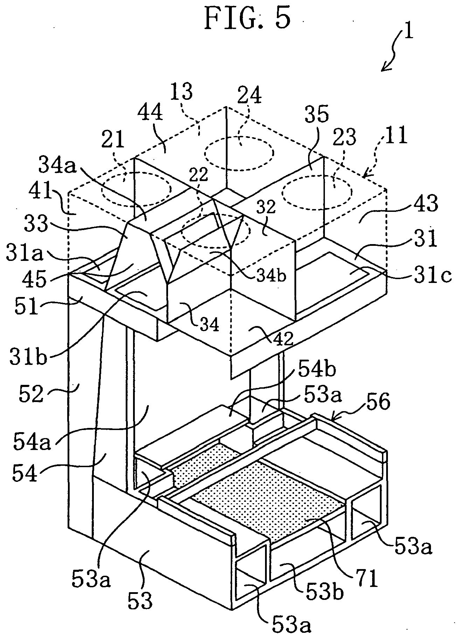

As can be seen from FIG. 5, the fourth member (54) is mounted in front of the second member (52) and over the third member (53). The fourth member (54) has a squared U-shape in horizontal cross section with an open front. And, inside the fourth member (54) there is formed an intermediate air exhaust passageway (54a) which extends in a vertical direction. The intermediate air exhaust passageway (54a) has a lower end side and an upper end side, wherein the former is connected to the two lower air exhaust passageways (53a, 53a) while the latter is connected to the upper air exhaust passageway (51b).

The intermediate air exhaust passageway (54a) is formed such that it extends, in an overlapping arrangement with the intermediate air supply passageway (52a), along the rear face plate (14) of the casing (10). More specifically, the intermediate air supply passageway (52a) is located on the side of the rear face plate (14) and formed adjacent to the rear face plate (14) while on the other hand the intermediate air exhaust passageway (54a) is formed more inside (relative to the front-back direction of the casing (10)) than the intermediate air supply passageway (52a). That is, the intermediate air exhaust passageway (54a) is located adjacent to the intermediate air supply passageway (52a), but it does not lie adjacent to the rear face plate (14) of the casing (10). The intermediate air exhaust passageway (54a) is a second passageway and is formed such that the indoor air, having passed through each heat exchange element (61, 62), flows therethrough.

The fourth member (54) is provided, at its lower end, with a cover member (54b) extending in a left and right direction. The cover member (54b) provides separation between the intermediate air exhaust passageway (54a) and the lower air supply passageway (53b).

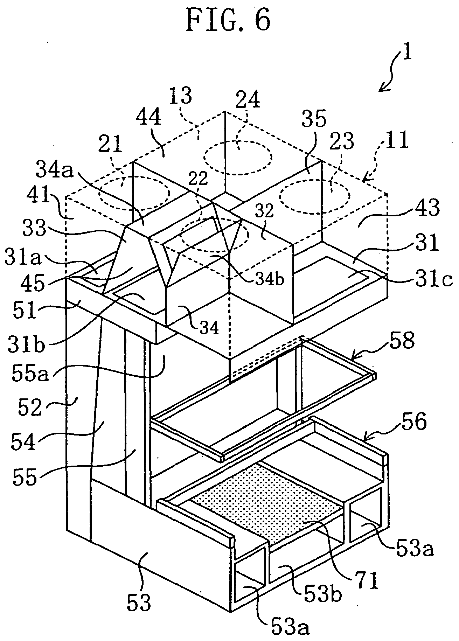

As illustrated in FIG. 6, the fifth member (55) is mounted in front of the fourth member (54) and over the third member (53). The fifth member (55) is shaped like a box with an open front side. Inside the fifth member (55) there is formed a connection air exhaust passageway (55a) which extends in a vertical direction. The connection air exhaust passageway (55a) is separated by the top plate of the fifth member (55) from the upper air exhaust passageway (51b) and is separated by the bottom plate of the fifth member (55) from the lower air supply passageway (53b).

The connection air exhaust passageway (55a) is formed such that it overlaps with the above-mentioned intermediate air exhaust passageway (54a). More specifically, the connection air exhaust passageway (55a) is formed such that it is located in front of and adjacent to the intermediate air exhaust passageway (54a). The connection air exhaust passageway (55a) is a third passageway and is formed such that the indoor air after passage through the first heat exchange element (61) but before entry to the second heat exchange element (62) flows therethrough.

An upper frame member (58) is mounted to the fifth member (55). The upper frame member (58) is provided, on its front, rear, left and right sides, with rod-shaped guide parts. The upper end of the second heat exchange element (62) and the lower end of the first heat exchange element (61) are engaged inside the upper frame member (58). That is, the upper frame member (58) functions as a position determining member for each heat exchange element (61, 62). In addition, the upper frame member (58) serves also as a seal member for the air passing through each heat exchange element (61, 62).

The first heat exchange element (61) and the second heat exchange element (62) together constitute a heat exchange member of the invention, and are arranged ahead of the fifth member (55). The first heat exchange element (61) is disposed between the upper frame member (58) and the first partition plate (31), and the second heat exchange element (62) is disposed between the lower frame member (56) and the upper frame member (58) (for example, see FIG. 3). In addition, each heat exchange element (61, 62) is positioned behind the front face panel (12). That is, each heat exchange element (61, 62) is arranged such that its front side is exposed to outside of the casing (10) by removal of the front face panel (12).

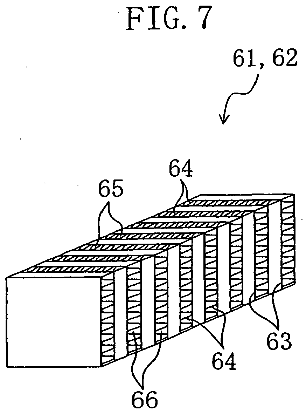

As can be seen from FIG. 7, each heat exchange element (61, 62) is shaped like a quadrangular prism with square, right and left end surfaces. In the heat exchange element (61, 62), flat plate members (63) and corrugated plate members (64) are arranged alternately in the longitudinal direction thereof. In the heat exchange element (61, 62), an outside-air flow passageway (65) for flow of the outdoor air therethrough and an inside-air flow passageway (66) for flow of the indoor air therethrough are arranged so as to alternate across the flat plate member (63). In the heat exchange element (61, 62) in the shape of a quadrangular prism, the outside-air flow passageway (65) is opened in one of the adjacent side surfaces while on the other hand the inside-air flow passageway (66) is opened in the other of the adjacent sides. As described above, the heat exchange element (61, 62) constitutes a crossflow heat exchanger in which the direction in which the outside-air flow passageway (65) is extended and the direction in which the inside-air flow passageway (66) is extended are orthogonal to each other.

The flat plate member (63) of the heat exchange element (61, 62) is formed by moisture-permeable material such as paper. In the heat exchange element (61, 62), the transfer of heat and moisture takes place from one of the outdoor air flowing through the outside-air flow passageway (65) and the indoor air flowing through the inside-air flow passageway (66) to the other. Stated another way, the heat exchange element (61, 62) constitutes a total heat exchanger capable of transfer of enthalpy between the flows of moist air.

As shown in FIG. 3, each heat exchange element (61, 62) is held within the casing main body (11) in such a position that the outside-air flow passageway (65) extends in a vertical direction while on the other hand the inside-air flow passageway (66) extends in a front-back direction. The outside-air flow passageway (65) of the second heat exchange element (62) has a lower end side and an upper end side, wherein the former is in fluid communication with the lower air supply passageway (53b) while the latter is in fluid communication with the lower end side of the outside-air flow passageway (65) of the first heat exchange element (61). In addition, the upper end side of the outside-air flow passageway (65) of the first heat exchange element (61) is in fluid communication through the third communication opening (31c) with the indoor air supply passageway (43).

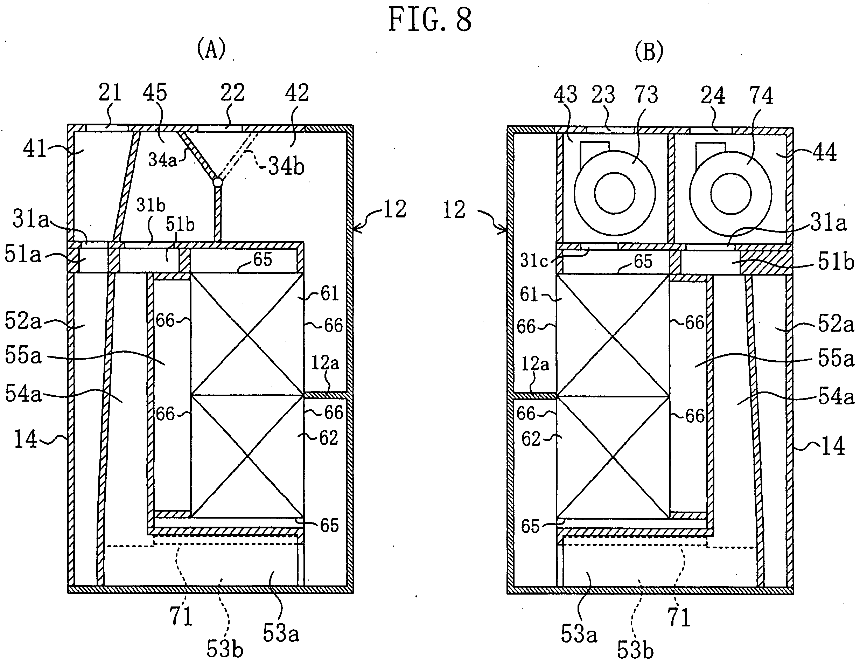

As illustrated in FIGS. 8(A) and 8(B), the front end side of the inside-air flow passageway (66) of the second heat exchange element (62) is in fluid communication via the lower space within the front face panel (12) with each lower air exhaust passageway (53a, 53a). In addition, the front end side of the inside -air flow passageway (66) of the first heat exchange element (61) is in fluid communication via the upper space within the front face panel (12) with the indoor inlet passageway (42). On the other hand, the rear end side of each of the heat exchange elements (61, 62) is in fluid communication with the connection air exhaust passageway (55a).

As described above, within the casing (10) there is formed an air supply passageway for flow of the outdoor air therethrough which extends from the outdoor inlet opening (21) to the indoor air supply opening (23). In addition, within the casing (10) there is formed an air exhaust passageway for flow of the indoor air therethrough which extends from the indoor inlet opening (22) to the outdoor air exhaust opening (24).

The ventilating device (1) is provided with a filter member (71), an electric component box (72), an air supply fan (73) and an air exhaust fan (74).

The filter member (71), for example, as illustrated in FIGS. 2 through 4, is disposed under the second heat exchange element (62) and within the lower air supply passageway (53b). The filter member (71) is composed of a plate-like base material and a filter for capture of dust particles contained in the air which is mounted on the base material. In the filter member (71) there is formed an air distribution passageway which extends in a vertical direction.

In addition, the filter member (71) is located on the back side of the closing member (12b) of the front face panel (12). That is, the filter member (71) is arranged such that it is exposed to outside of the casing (10) by removal of the closing member (12b). Furthermore, the filter member (71) is so supported by the third member (53) as to be able to slide back and forth.

The electric component box (72) houses therein various electric components necessary for the operation of the ventilating device (1). The electric component box (72) is mounted in the upper section of the casing (10). Incidentally, if moisture enters any air passageway within the casing (10) for some reason such as faulty workmanship in the construction, such moisture tends to finally accumulate in the bottom of the casing (10). In the present embodiment, however, the electric component box (72) is disposed adjacent to the top of the casing (10), whereby it can be prevented that the area around the electric component box (72) is placed in a wet state and it is further prevented that each electric component undergoes electric trouble. In addition, the electric component box (72) is located on the back side of the console part (12c) of the front face panel (12). That is, the electronic component box (72) is arranged such that it is exposed to outside of the casing (10) by removal of the front face panel (12).

The air supply fan (73) is to convey the outdoor air flowing through the air supply passageway, and the air exhaust fan (74) is to convey the indoor air flowing through the air exhaust passageway. As depicted in FIG. 8(B), the air supply fan (73) and the air exhaust fan (74) are arranged within the casing (10) and adjacent to the top thereof. More specifically, the air supply fan (73) is disposed in the indoor air supply passageway (43), and the air exhaust fan (74) is disposed in the outdoor air exhaust passageway (44). Because of the foregoing arrangement that each fan (73, 74) is disposed adjacent to the top of the casing (10), it can be prevented that the area around each of the fans (73, 74) is placed in a wet state and it is further prevented that each fan (73, 74) undergoes electric trouble, as in the case of the electric component box (72).

In the air supply passageway the air supply fan (73) is disposed downstream of each heat exchange element (61, 62). That is, each heat exchange element (61, 62) is disposed on the inlet side of the air supply fan (73). This therefore facilitates the even distribution of outdoor air that is conveyed by the air supply fan (73) throughout the entire area of the outside-air flow passageway (65) of each heat exchange element (61, 62), in comparison with the case where the air supply fan (73) is disposed upstream of each heat exchange element (61, 62).

In the air exhaust passageway the air exhaust fan (74) is disposed downstream of each heat exchange element (61, 62). That is, each heat exchange element (61, 62) is disposed on the inlet side of the air exhaust fan (74). This therefore facilitates the even distribution of indoor air that is conveyed by the air exhaust fan (74) throughout the entire area of the inside-air flow passageway (66) of each heat exchange element (61, 62), in comparison with the case where the air exhaust fan (74) is disposed upstream of each heat exchange element (61, 62).

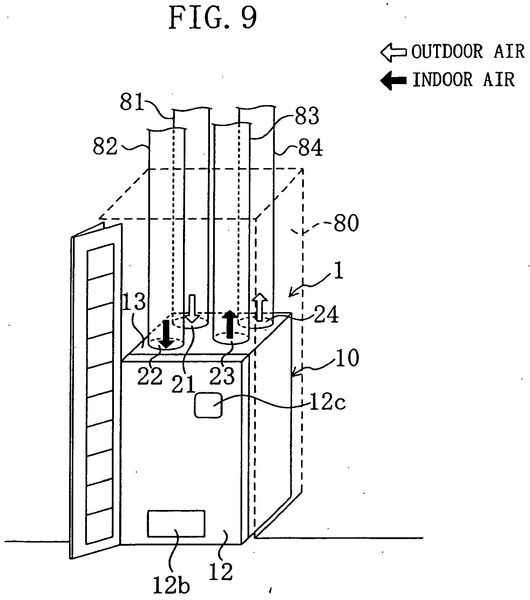

As illustrated in FIG. 9, the ventilating device (1) formed in accordance with the present embodiment is installed within a storage space (80) such as an indoor closet or the like. The ventilating device (1) is installed such that the front face panel (12) is positioned in the open part on the front side of the storage space (80). In the ventilating device (1), the outdoor inlet opening (21), the indoor inlet opening (22), the indoor air supply opening (23) and the outdoor air exhaust opening (24) are upwardly opened in the top face plate (13). And in the storage space (80), four ducts (81, 82, 83, 84) extending vertically downwardly from the ceiling are connected respectively to the inlet openings (21, 22) and the air supply and exhaust openings (23, 24). More specifically, the outdoor inlet duct (81) in fluid communication with the outdoor space is connected to the outdoor inlet opening (21). The indoor inlet duct (82) in fluid communication with the indoor space is connected to the indoor inlet opening (22). The indoor air supply duct (83) in fluid communication with the indoor space is connected to the indoor air supply opening (23). The outdoor air exhaust duct (84) in fluid communication with the outdoor space is connected to the outdoor air exhaust opening (24).

### RUNNING OPERATION

The ventilating device (1) of the present embodiment is configured such that it is selectively switchable between a heat exchange ventilation operation and a regular ventilation operation.

### HEAT EXCHANGE VENTILATION OPERATION

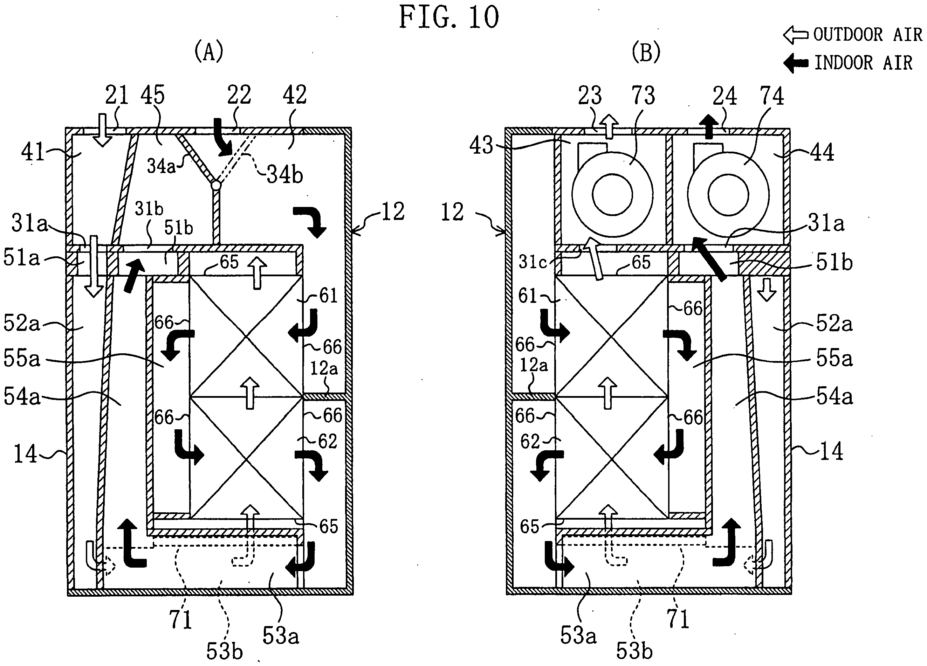

With reference now to FIGS. 10(A) and 10(B), there follows a description of the heat exchange ventilation operation. This operation is carried out when there are large differences in temperature and/or humidity between the indoor space being air conditioned and the outdoor space, such as in the winter or summer months.

In the heat exchange ventilation operation, the switching damper (34b) is set such that it is so positioned as to place the bypass introduction opening (34a) in the closed state (see FIG. 10(A)). If, in this state, the air supply fan (73) and the air exhaust fan (74) are activated, then outdoor air flows through the outdoor inlet duct (81) into the outdoor inlet opening (21) while indoor air flows through the indoor inlet duct (82) into the indoor inlet opening (22).

The outdoor air, having flowed into the casing (10) from the outdoor inlet opening (21), passes through the outdoor inlet passageway (41) and then through the upper air supply passageway (51a) and then flows through the intermediate air supply passageway (52a). The outdoor air flowing through the intermediate air supply passageway (52a) passes through the lower air supply passageway (53b) and is thereafter distributed upwardly through the filter member (71). The filter member (71) captures dust particles or the like contained in the outdoor air. The outdoor air, having passed through the filter member (71), travels vertically upwardly and passes first through the second heat exchange element (62) and then through the first heat exchange element (61).

On the other hand, the indoor air, having flowed into the casing (10) from the indoor inlet opening (22), passes through the indoor inlet passageway (42) and then flows through the upper space within the front face panel (12). Thereafter, the indoor air passes through the first heat exchange element (61) and then passes through the second heat exchange element (62) by way of the connection air exhaust passageway (55a).

In each heat exchange element (61, 62), the transfer of heat and moisture takes place between the outdoor air flowing through the outside-air flow passageway (65) and the indoor air flowing through the inside-air flow passageway (66).

For example, the temperature and the humidity of the indoor air are higher relative to those of the outdoor air, for example, when the room is being air-conditioned in the winter months. Accordingly, if, in this state, the heat exchange ventilation operation is carried out, the transfer of heat and moisture takes place from the indoor air to the outdoor air in the heat exchange element (61, 62). That is, the outdoor air that is supplied into the room is heated and humidified by the indoor air that is exhausted outdoors.

In addition, the temperature and the humidity of the indoor air are lower relative to those of the outdoor air, when the room is being air-conditioned in the summer months. Accordingly, if, in this state, the heat exchange ventilation operation is carried out, the transfer of heat and moisture takes place from the outdoor air to the indoor air in the heat exchange element (61, 62). That is, the outdoor air that is supplied into the room is cooled and dehumidified by the indoor air that is exhausted outdoors.

The outdoor air, after passage first through the second heat exchange element (62) and then through the first heat exchange element (61), passes through the indoor air supply passageway (43) and is thereafter discharged outside the casing (10) through the indoor air supply opening (23). This air is supplied by way of the indoor air supply duct (83) to a predetermined indoor space.

The indoor air, after passage first through the first heat exchange element (61) and then through the second heat exchange element (62), flows in the lower space of the front face panel (12). Thereafter, the flow of the indoor air is split into two passageways, namely the lower air exhaust passageways (53a, 53a) and these flows again join together in the intermediate air exhaust passageway (54a). The outdoor air flowing through the intermediate air exhaust passageway (54a) passes through the upper air exhaust passageway (51b) and then through the outdoor air exhaust passageway (44) and is discharged outside the casing (10) through the outdoor air exhaust opening (24). This air is discharged outdoors by way of the outdoor air exhaust duct (84).

### REGULAR VENTILATION OPERATION

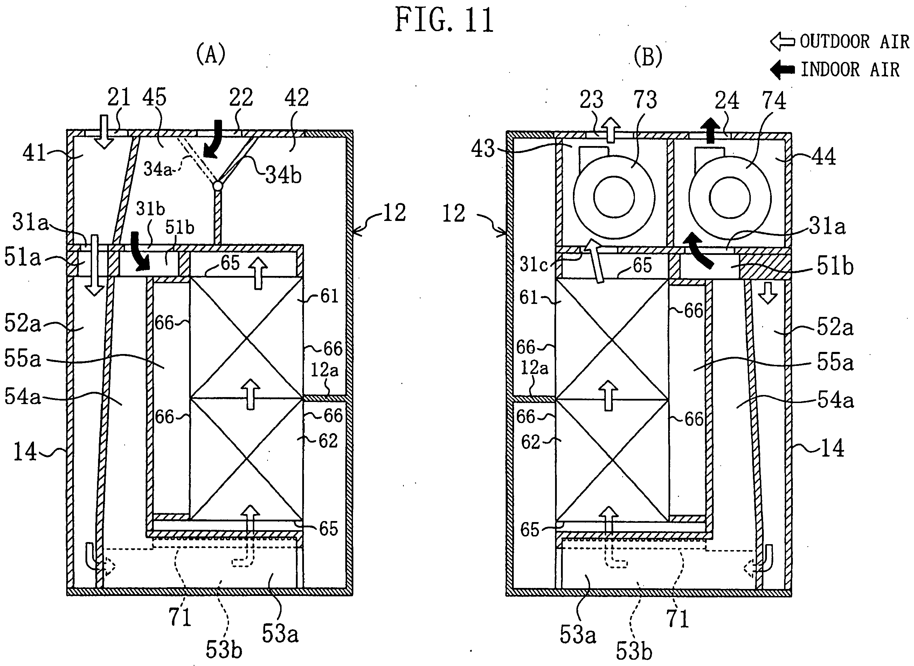

With reference now to FIGS. 11 (A) and 11 (B), there follows a description of the regular ventilation operation. This operation is carried out when there are not great differences in temperature and/or humidity between an indoor space being air conditioned and an outdoor space, such as in the intermediate season (spring and autumn).

In the regular ventilation operation, the switching damper (34b) is set such that it is so positioned as to place the bypass introduction opening (34a) in the opened state (see FIG. 12(A)). In this state, the indoor inlet opening (22) and the indoor inlet passageway (42) are discontinued from each other by the switching damper (34b). If, in this state, the air supply fan (73) and the air exhaust fan (74) are activated, then outdoor air flows through the outdoor inlet duct (81) into the outdoor inlet opening (21) while indoor air flows through the indoor inlet duct (82) into the indoor inlet opening (22).

The indoor air, having flowed into the casing (10) from the indoor inlet opening (22), flows through the bypass passageway (45) and then through the upper air exhaust passageway (51b) into the outdoor air exhaust passageway (44). That is, in the regular ventilation operation, the outdoor air bypassing each heat exchange element (61, 62) is fed to the outdoor air exhaust passageway (44).

On the other hand, the outdoor air, having flowed into the casing (10), flows through the air supply passageway, as in the heat exchange ventilation operation. Here, during the regular ventilation operation, no indoor air flows through the inside-air flow passageway (66) of each heat exchange element (61, 62). Consequently, during the passage of the outdoor air through each heat exchange element (61, 62), no transfer of heat and moisture between the outdoor air and the indoor air takes place.

As described above, in the regular ventilation operation, the outdoor air drawn in through the outdoor inlet opening (21) is discharged from the indoor air supply opening (23) with little change in temperature and humidity, and is then supplied by way of the indoor air supply duct (83) to a predetermined indoor space. In addition, the indoor air drawn in through the indoor inlet opening (22) is discharged from the outdoor air exhaust opening (24) with little change in temperature and humidity, and is then supplied by way of the outdoor air exhaust duct (84) to a predetermined outdoor space.

### HEAT-LOSS REDUCTION EFFECT

Incidentally, in the case where the ventilating device (1) is installed for operation in an indoor space, as shown in FIG. 9, the transfer of heat takes place between the air that is discharged outdoors through the air exhaust passageway (i.e., the exhaust air) and an indoor space in the room, in the above-described heat exchange ventilation operation. This may result in the possibility of the increase in the heating or cooling load of the indoor space.

More specifically, for example, in the winter months, the indoor air from which heat has been extracted in each heat exchange element (61, 62) is discharged outdoors by way of the air exhaust passageway. Consequently, the air of relatively low temperature (exhaust air) flows through the air exhaust passageway downstream of each heat exchange element (61, 62). On the other hand, the ambient temperature of the casing (10), i.e., the room temperature, tends to be higher than the temperature of the exhaust air. Because of this, during the operation in the winter months, the heat in the indoor space will be transferred through the casing (10) to the exhaust air. This may result in the possibility of humidifying the exhaust air. This exhaust air is then discharged outdoors. As a result, the heat supplied by the ventilating device (1) to the indoor space is after all discarded outdoors, thereby giving rise to the problem that the heating load in the winter months increases.

In addition, for example, in the summer months, the indoor air to which heat has been transferred in each heat exchange element (61, 62) is discharged outdoors by way of the air exhaust passageway. Consequently, the exhaust air of relatively high temperature flows through the air exhaust passageway downstream of each heat exchange element (61, 62). On the other hand, the ambient temperature of the casing (10) tends to be lower than the temperature of the exhaust air. This may result in the possibility of the transfer of heat in the exhaust air to the room via the casing (10). As a result, the room temperature increases, thereby resulting in the possibility of the increase in the cooling load in the summer months.

To cope with the above problems, in the ventilating device (1) of the present embodiment, the intermediate air supply passageway (52a), the intermediate air exhaust passageway (54a) and the connection air exhaust passageway (55a) are arranged sequentially in that order in the direction from the rear face plate (14) of the casing (10) towards the internal side (front side) of the casing (10), for example, as shown in FIG. 10. As a result, it can be prevented that, in the heat exchange ventilation operation of the ventilating device (1), the heating or cooling load of the indoor space increases, as described below.

In the first place, in the winter months, the indoor air cooled in each heat exchange element (61, 62) flows through the intermediate air exhaust passageway (54a) while staying at relatively low temperatures (for example, 5 degrees Centigrade). Here, the intermediate air exhaust passageway (54a) is not located adjacent to the rear face plate (14) of the casing (10). Consequently, it can be avoided that the heat in the indoor air heated to relatively high temperatures in the indoor space (for example, 20 degrees Centigrade) is transferred through the casing (10) to the exhaust air flowing through the intermediate air exhaust passageway (54a). As a result, the increase in the heating load of the room can be reduced.

In addition, the intermediate air exhaust passageway (54a) is located adjacent to the intermediate air supply passageway (52a). Here, the outdoor air of relatively low temperature (for example, minus 5 degrees Centigrade) is flowing through the intermediate air supply passageway (52a). Consequently, the heat in the exhaust air flowing through the intermediate air exhaust passageway (54a) is supplied through the sidewall of the fourth member (54) to the outdoor air flowing through the intermediate air supply passageway (52a), whereby the outdoor air is heated. That is, in the present embodiment, the heat in the exhaust air flowing through the intermediate air exhaust passageway (54a) is recovered into the outdoor air flowing through the intermediate air supply passageway (52a). The outdoor air after such heat recovery is finally supplied into the room in the way as described above.

Furthermore, in the ventilating device (1), the indoor air flows upwardly through the intermediate air exhaust passageway (54a) while the outdoor air flows downwardly through the intermediate air supply passageway (52a). That is, the air flowing through the intermediate air exhaust passageway (54a) and the air flowing through the intermediate air supply passageway (52a), between which heat is to be exchanged, flow in opposite directions to each other. This increases the efficiency of heat exchange between both the air flows, thereby increasing also the amount of heat that is recovered into the outdoor air flowing through the intermediate air supply passageway (52a).

In addition, the intermediate air exhaust passageway (54a) is located adjacent also to the connection air exhaust passageway (55a). Here, the indoor air, cooled to relatively low temperatures (for example, 12 degrees Centigrade) in the first heat exchange element (61), is flowing through the connection air exhaust passageway (55a). Therefore, if the indoor air of high temperature (for example, 20 degrees Centigrade) before cooling in the first heat exchange element (61) is made to flow through the connection air exhaust passageway (55a), this causes the heat in the indoor air to easily be transferred to the exhaust air flowing through the intermediate air exhaust passageway (54a). In the present embodiment, however, it is made difficult for the heat in the indoor air flowing through the connection air exhaust passageway (55a) to transfer to the exhaust air. As a result, the amount of heat that is discharged outdoors through the air exhaust passageway can be reduced to a minimum.

On the other hand, in the summer months, the indoor air heated in each heat exchange element (61, 62) flows through the intermediate air exhaust passageway (54a) while staying at relatively high temperatures (for example, 30 degrees Centigrade). Here, the intermediate air exhaust passageway (54a) is not located adjacent to the rear face plate (14) of the casing (10). Consequently, it can be avoided that the heat in the exhaust air flowing through the intermediate air exhaust passageway (54a) is transferred through the casing (10) to the indoor air (for example, 25 degrees Centigrade) in the indoor space. As a result, the increase in the cooling load of the room can be reduced.

In addition, the intermediate air exhaust passageway (54a) is located adjacent to the intermediate air supply passageway (52a). Here, the outdoor air of relatively high temperature (for example, 32 degrees Centigrade) is flowing through the intermediate air supply passageway (52a). Consequently, the heat in the outdoor air flowing through the intermediate air supply passageway (52a) is transferred to the exhaust air flowing through the intermediate air exhaust passageway (54a) through the wall surface of the fourth member (54), whereby the outdoor air flowing through the intermediate air supply passageway (52a) is cooled. That is, in the present embodiment, the cold heat in the exhaust air flowing through the intermediate air exhaust passageway (54a) is recovered into the outdoor air flowing through the intermediate air supply passageway (52a). The outdoor air after such cold heat recovery is finally supplied into the room, as described above.

Furthermore, in the ventilating device (1), the indoor air flows upwardly through the intermediate air exhaust passageway (54a) while the outdoor air flows downwardly through the intermediate air supply passageway (52a). That is, the air flowing through the intermediate air exhaust passageway (54a) and the air flowing through the intermediate air supply passageway (52a), between which heat is to be exchanged, flow in opposite directions to each other. This increases the efficiency of heat exchange between both the air flows, thereby increasing also the amount of cold heat that is recovered into the outdoor air flowing through the intermediate air supply passageway (52a).

In addition, the intermediate air exhaust passageway (54a) is located adjacent also to the connection air exhaust passageway (55a). Here, the indoor air, heated to relatively high temperatures (for example, 28 degrees Centigrade) in the first heat exchange element (61), is flowing through the connection air exhaust passageway (55a). Therefore, if the indoor air of lower temperature (for example, 25 degrees Centigrade) before cooling in the first heat exchange element (61) is flowing through the connection air exhaust passageway (55a), this causes the heat in the exhaust air flowing through the intermediate air exhaust passageway (54a) to easily be transferred to the indoor air flowing through the connection air exhaust passageway (55a). In the present embodiment, however, it is made difficult for the heat in the exhaust air to transfer to the indoor air flowing through the connection air exhaust passageway (55a). As a result, the amount of cold heat that is discharged outdoors through the air exhaust passageway can be reduced to a minimum.

### INSTALLATION STATE AND MAINTENANCE OF THE VENTILATING DEVICE

As described above with reference to FIG. 9, in the ventilating device (1) of the present embodiment, the outdoor inlet opening (21), the indoor inlet opening (22), the indoor air supply opening (23) and the outdoor air exhaust opening (24) are all formed in the top face plate (13) of the casing (10) and the four ducts (81, 82, 83, 84) extending downwardly from the ceiling are connected respectively to the inlet openings (21, 22) and the air supply and exhaust openings (23, 24). That is, in the present embodiment, none of the ducts (81, 82, 83, 84) are arranged sideways and back and forth of the ventilating device (1). This makes it possible to install the ventilating device (1) in the relatively small storage space (80) such as a closet or the like space.

In addition, in the present embodiment, the ventilating device (1) is, as described above, a floor installation type. This enables the user or the maintenance service person to easily carry out maintenance work on the ventilating device (1) from the room side. This will be described below.

The ventilating device (1) is installed such that the front face panel (12) of the casing (10) is exposed on the open side of the storage space (80). Whenever the user cleans or replaces the filter member (71), the user slidingly pulls the closing member (12b) of the front face panel (12) to remove it from the casing (10). As a result, the filter member (71) shown in FIG.2 is exposed to outside of the casing (10). The user further slidingly pulls the filter member (71) and then cleans or replaces the filter member (71).

Incidentally, the filter member (71) underlies the first heat exchange element (61). Therefore, even when dust particles of relatively small diameter which have escaped capture in the filter member (71) adhere to the lower surface of the first heat exchange element (61) in the running operation of the ventilating device (1), these small-diameter dust particles are forced to fall down when the ventilating device (1) is stopped later, and then accumulate on the upper surface of the filter member (71). This therefore allows the user to clean up the small-diameter dust particles together with the dust particles captured by the filter member (71). In addition, the filter member (71) is arranged underneath the heat exchange element (61), whereby, even when dust particles peel off from the filter member (71), for example, at the time of replacement thereof, the dust particles will never adhere to the upper side of the heat exchange element (61).

Each element (61, 62) and the electric component box (72) are exposed to outside of the casing (10) by removal of the front face panel (12) from the casing main body (11). This therefore enables the maintenance service person or the like to easily carry out maintenance work on each heat exchange element (61, 62) and each electric component housed within the electric component box (72) by access from the front side of the ventilating device (1).

### ADVANTAGEOUS EFFECTS OF THE EMBODIMENT

In the foregoing embodiment, it is arranged such that the outdoor inlet opening (21), the indoor inlet opening (22), the indoor air supply opening (23) and the outdoor air exhaust opening (24) are all provided in the top face plate (13) of the casing (10). Therefore, even in the case where the ventilating device (1) is installed on the floor, it is still possible to minimize the space of installation of the ducts that are connected respectively to the inlet openings (21, 22) and the air supply and exhaust openings (23, 24), whereby the degree of freedom of the installation location of the ventilating device (1) can be improved.

In addition, the maintenance work of the floor-type ventilating device (1) is carried out more easily by access from the indoor space side, as compared to, for example, the ceiling-embedded type.

Additionally, in the foregoing embodiment, it is arranged such that the heat exchange element (61, 62) and the electric component box (72) are exposed to outside of the casing (10) by removal of the front face panel (12). Besides, in the foregoing embodiment, it is arranged such that the filter member (71) is exposed to outside of the casing (10) by removal of the closing member (12b). Therefore, in accordance with the foregoing embodiment, it is possible to easily carry out maintenance work on each component by access from the front side of the ventilating device (1) even when the ventilating device (1) is installed in the storage space (80) such as a closet or the like.

In accordance with the foregoing embodiment, as shown in FIGS. 10(A) and 10(B), the intermediate air supply passageway (52a) and the intermediate air exhaust passageway (54a) are so formed as to overlap with each other along the rear face plate (14) of the casing (10), wherein the outdoor air upstream of each heat exchange element (61, 62) is made to flow and pass through the intermediate air supply passageway (52a) on the side of the rear face plate (14) of the casing (10) while the indoor air downstream of each heat exchange element (61, 62) is made to flow and pass through the intermediate air exhaust passageway (54a) on the inner side of the casing (10). Hence, in accordance with the foregoing embodiment, it can be avoided that the indoor heat around the casing (10) transfers to the exhaust air flowing through the intermediate air exhaust passageway (54a) during the heat exchange ventilation operation in the winter months, whereby it can be prevented that the heating load increases. In addition, the heat in the exhaust air flowing through the intermediate air exhaust passageway (54a) can be recovered into the outdoor air flowing through the intermediate air supply passageway (52a), whereby the heating load can be reduced to a further extent.

In addition, in accordance with the foregoing embodiment, it can be avoided that the heat in the exhaust air flowing through the intermediate air exhaust passageway (54a) transfers to the indoor space around the casing (10) during the heat exchange ventilation operation in the summer months, whereby it can be prevented that the cooling load increases. In addition, the cold heat in the exhaust air flowing through the intermediate air exhaust passageway (54a) can be recovered into the outdoor air flowing through the intermediate air supply passageway (52a), whereby the cooling load can be reduced to a further extent.

In addition, in accordance with the foregoing embodiment, the connection air exhaust passageway (55a) is formed such that it is located adjacent to the intermediate air exhaust passageway (54a), whereby the indoor air after passage through the first heat exchange element (61) is made to flow and pass through the connection air exhaust passageway (55a). Hence, in accordance with the foregoing embodiment, the amount of heat transfer between the exhaust air flowing through the intermediate air exhaust passageway (54a) and the outdoor air flowing through the connection air exhaust passageway (55a) can be reduced as compared to, for example, when the indoor air before passage through the first heat exchange element (61) is flowed and passed through the connection air exhaust passageway (55a), thereby making it possible to prevent the increase in the load of heating or cooling associated with such a transfer of heat.

Furthermore, in accordance with the foregoing embodiment, the outdoor air flowing through the intermediate air supply passageway (52a) and the exhaust air flowing through the intermediate air exhaust passageway (54a) are opposed flows, thereby making it possible to enhance the efficiency of the exchange of heat between these air flows. Hence, in accordance with the foregoing embodiment, the heating load is reduced to a further extent in the winter months while on the other hand the cooling load is reduced to a further extent in the summer months.

### OTHER EMBODIMENTS

With respect to the foregoing embodiment, the invention may be configured in the following manner.

In the foregoing embodiment, it is arranged such that the outdoor inlet opening (21), the indoor inlet opening (22), the indoor air supply opening (23) and the outdoor air exhaust opening (24) are all provided in the top face plate (13) of the casing (10). However, the inlet openings (21, 22) and the air supply and exhaust openings (23, 24) are not necessarily provided in the top face of the casing (10). For example, these openings may be formed in an area of a side plate of the casing (10) located adjacent to the top thereof. Also in such an arrangement, the extending of each duct towards the ceiling makes it possible to avoid that the space on the indoor floor side becomes narrower.

In addition, it is arranged such that the filter member (71) of the foregoing embodiment captures dust particles contained in the outdoor air upstream of each heat exchange element (61, 62). However, alternatively, it may be arranged such that the filter member captures dust particles contained in the indoor air upstream of each heat exchange element (61, 62). Also in this case, it becomes easy to conduct maintenance work on the filter member by removing the front face panel (12) to expose the filter member to the outside.

In addition, the ventilating device (1) of the foregoing embodiment employs the heat exchange element (61, 62) for heat and moisture (that is, sensible heat and latent heat) exchange between the outdoor air and the indoor air; however, as a substitute for the heat exchange element (61, 62), a sensible heat exchange element may be used, only for sensible heat exchange between the outdoor air and the indoor air. In addition, the number of heat exchange elements (61, 62) is not limited to two and may be one or three or greater.

It should be noted that the above-described embodiments are merely preferable exemplifications in nature and are no way intended to limit the scope of the present claims.

### INDUSTRIAL APPLICABILITY

As has been described above, the present invention finds its utility in the field of ventilating devices which are configured to supply outdoor air into an indoor space while discharging indoor air outdoors and which are provided with a heat exchange element for heat exchange between the outdoor air and the indoor air.

## Claims

1. A ventilating device which comprises:
a casing (10) in which are formed an air supply passageway for establishing connection of an outdoor inlet opening (21) and an indoor air supply opening (23), and an air exhaust passageway for establishing connection of an indoor inlet opening (22) and an outdoor air exhaust opening (24); and
a heat exchange element (61, 62) which is housed within the casing (10) for effecting heat exchange between outdoor air flowing through the air supply passageway and indoor air flowing through the air exhaust passageway;
wherein the outdoor inlet opening (21), the indoor air supply opening (23), the indoor inlet opening (22) and the outdoor air exhaust opening (24) are formed in an upper section of the casing (10),
**characterized in that**:
a first passageway (52a) and a second passageway (54a) are formed as to overlap with each other along an outside surface of the casing (10), the first passageway (52a) being located nearer to the outside surface of the casing, and the second passageway (54a) being located nearer to an inside of the casing,
the first passage way (52a) is located adjacent to the outside surface and upstream of the heat exchange element (61, 62) such that the outdoor air before entry into the heat exchange element (61, 62) flows therethrough;
the second passageway (54a) is located adjacent to the first passageway (52a) but not adjacent to the outside surface of the casing, and the second passageway (54a) is located downstream of the heat exchange element (61, 62) such that the indoor air after passage through the heat exchange element (61, 62) flows therethrough.

2. The ventilating device of claim 1, wherein the outdoor inlet opening (21), the indoor air supply opening (23), the indoor inlet opening (22) and the outdoor air exhaust opening (24) are formed in a top surface of the casing.

3. The ventilating device of either claim 1 or claim 2,
wherein, in the casing (10), a front face panel (12) formed on the front of the casing (10) is rendered removable; and
wherein the heat exchange element (61, 62) is arranged such that it becomes exposed to outside of the casing (10) when the front face panel (12) is removed.

4. The ventilating device of either claim 1 or claim 2,
wherein the ventilating device includes a filter (71) for capture of dust particles contained in the air flowing through either the air supply passageway or the air exhaust passageway;
wherein, in the casing (10), a front face panel (12) formed on the front of the casing (10) is rendered removable; and
wherein the filter (71) is arranged such that it becomes exposed to outside of the casing (10) when the front face panel (12) is removed.

5. The ventilating device of claim 4, wherein, in the air supply passageway, the filter (71) is arranged upstream of the heat exchange element (61, 62).

6. The ventilating device of claim 5,
wherein the heat exchange element (61, 62) is constructed such that the air in the air supply passageway flows upwardly across the heat exchange element (61, 62); and
wherein the filter (71) is arranged underneath the heat exchange element (61).

7. The ventilating device of either claim 1 or claim 2,
wherein the ventilating device includes an electric component box (72) in which to accommodate electric components;
wherein, in the casing (10), a front face panel (12) formed on the front of the casing (10) is rendered removable; and
wherein the electric component box (72) is arranged such that it becomes exposed to outside of the casing (10) when the front face panel (12) is removed.

8. The ventilating device of claim 7, wherein the electric component box (72) is mounted in the upper section of the casing (10).

9. The ventilating device of either claim 1 or claim 2,
wherein the ventilation includes an air supply fan (73) for conveyance of the air flowing through the air supply passageway and an air exhaust fan (74) for conveyance of the air flowing through the air exhaust passageway; and
wherein the air supply fan (73) and the air exhaust fan (74) are mounted in the upper section of the casing (10).

10. The ventilating device of either claim 1 or claim 2,
wherein the ventilating device includes an air supply fan (73) for conveyance of the air flowing through the air supply passageway and an air exhaust fan (74) for conveyance of the air flowing through the air exhaust passageway;
wherein, in the air supply passageway, the air supply fan (73) is arranged downstream of the heat exchange element (61, 62); and
wherein, in the air exhaust passageway, the air exhaust fan (74) is arranged downstream of the heat exchange element (61, 62).

11. The ventilating device of claim 10,
wherein the casing (10) contains the heat exchange element (61, 62) which is comprised of a first heat exchange element (61) and a second heat exchange element (62);
wherein, in the casing (10), a third passageway (55a) is so formed as to overlap with the second passageway (54a); and
wherein the third passageway (55a) is configured such that the indoor air after passage through the first heat exchange element (61) but before entry to the second heat exchange element (62) flows therethrough.

12. The ventilating device of claim 11, wherein the direction in which the outdoor air flows through the first passageway (52a) and the direction in which the indoor air flows through the second passageway (54a) are opposite to each other.

## Patentansprüche

1. Lüftungsvorrichtung, umfassend:
ein Gehäuse (10), in dem ein Luftzufuhrdurchgang zum Bilden einer Verbindung einer Außenraum-Einlassöffnung (21) und einer Innenluft-Zufuhröffnung (23) gebildet ist, und ein Luftabgabedurchgang zum Bilden einer Verbindung einer Innenraum-Einlassöffnung (22) und einer Außenluft-Abgabeöffnung (24); und
ein Wärmetauschelement (61, 62), das innerhalb des Gehäuses (10) angeordnet ist, um einen Wärmetausch zwischen Außenluft, die durch den Luftzufuhrdurchgang strömt, und Innenluft, die durch den Luftabgabedurchgang strömt, auszuführen;
wobei die Außenraum-Einlassöffnung (21), die Innenluft-Zufuhröffnung (23), die Innenraum-Einlassöffnung (22) und die Außenluft-Abgabeöffnung (24) in einem oberen Abschnitt des Gehäuses (10) ausgebildet sind, **dadurch gekennzeichnet, dass**:
ein erster Durchgang (52a) und ein zweiter Durchgang (54a) so ausgebildet sind, dass sie entlang einer Außenfläche des Gehäuses (10) überlappen, wobei der erste Durchgang (52a) näher an der Außenfläche des Gehäuses angeordnet ist, und der zweite Durchgang (54a) näher an einer Innenseite des Gehäuses angeordnet ist,
wobei der erste Durchgang (52a) benachbart zu der Außenfläche und stromauf des Wärmetauschelements (61, 62) angeordnet ist, so dass die Außenluft vor ihrem Eintritt in das Wärmetauschelement (61, 62) dadurch hindurchströmt;
wobei der zweite Durchgang (54a) benachbart zu dem ersten Durchgang (52a), aber nicht benachbart zu der Außenfläche des Gehäuses angeordnet ist, und der zweite Durchgang (54a) stromab des Wärmetauschelements (61, 62) angeordnet ist, so dass die Innenluft nach ihrem Durchgang durch das Wärmetauschelement (61, 62) dadurch hindurchströmt.

2. Lüftungsvorrichtung nach Anspruch 1, **dadurch gekennzeichnet, dass** die Außenraum-Einlassöffnung (21), die Innenluft-Zufuhröffnung (23), die Innenraum-Einlassöffnung (22) und die Außenluft-Abgabeöffnung (24) in einer oberen Oberfläche des Gehäuses ausgebildet sind.

3. Lüftungsvorrichtung nach Anspruch 1 oder 2, **dadurch gekennzeichnet, dass** in dem Gehäuse (10) eine vordere Seitenplatte (12), die an der Vorderseite des Gehäuses (10) ausgebildet ist, abnehmbar ausgebildet ist; und wobei das Wärmetauschelement (61, 62) so angeordnet ist, dass es zur Außenseite des Gehäuses (10) hin frei liegt, wenn die vordere Seitenplatte (12) abgenommen ist.

4. Lüftungsvorrichtung nach Anspruch 1 oder 2, **dadurch gekennzeichnet, dass** die Lüftungsvorrichtung einen Filter (71) zum Auffangen von Staubpartikeln, die in der Luft enthalten sind, die entweder durch den Luftzufuhrdurchgang oder durch den Luftabgabedurchgang strömt, aufweist;
wobei in dem Gehäuse (10) eine vordere Seitenplatte (12). die an der Vorderseite des Gehäuses (10) ausgebildet ist, abnehmbar ausgebildet ist; und
wobei der Filter (71) so angeordnet ist, dass er zur Außenseite des Gehäuses (10) hin frei liegt, wenn die vordere Seitenplatte (12) abgenommen ist.

5. Lüftungsvorrichtung nach Anspruch 4, **dadurch gekennzeichnet, dass** der Filter (71) in dem Luftzufuhrdurchgang stromauf des Wärmetauschelements (61, 62) angeordnet ist.

6. Lüftungsvorrichtung nach Anspruch 5, **dadurch gekennzeichnet, dass** das Wärmetauschelement (61, 62) so konstruiert ist, dass die Luft in dem Luftzufuhrdurchgang nach oben quer über das Wärmetauschelement (61, 62) strömt; und wobei der Filter (71) unterhalb des Wärmetauschelements (61) angeordnet ist.

7. Lüftungsvorrichtung nach Anspruch 1 oder 2, **dadurch gekennzeichnet, dass** die Lüftungsvorrichtung einen Elektrokomponentenkasten (72) zur Aufnahme elektrischer Komponenten aufweist; wobei in dem Gehäuse (10) eine vordere Seitenplatte (12), die an der Vorderseite des Gehäuses (10) ausgebildet ist, abnehmbar ausgebildet ist; und wobei der Elektrokomponentenkasten (72) so angeordnet ist, dass er zur Außenseite des Gehäuses (10) hin frei liegt, wenn die vordere Seitenplatte (12) abgenommen ist.

8. Lüftungsvorrichtung nach Anspruch 7, **dadurch gekennzeichnet, dass** der Elektrokomponentenkasten (72) im oberen Abschnitt des Gehäuses (10) angebracht ist.

9. Lüftungsvorrichtung nach Anspruch 1 oder 2, **dadurch gekennzeichnet, dass** die Lüftungsvorrichtung ein Luftzufuhrgebläse (73) zum Fördern der durch den Luftzufuhrdurchgang strömenden Luft und ein Luftabgabegebläse (74) zum Fördern der durch den Luftabgabedurchgang strömenden Luft aufweist, und wobei das Luftzufuhrgebläse (73) und das Luftabgabegebläse (74) in dem oberen Abschnitt des Gehäuses (10) angebracht sind.

10. Lüftungsvorrichtung nach Anspruch 1 oder 2, **dadurch gekennzeichnet, dass** die Lüftungsvorrichtung ein Luftzufuhrgebläse (73) zum Fördern der durch den Luftzufuhrdurchgang strömenden Luft und ein Luftabgabegebläse (74) zum Fördern der durch den Luftabgabedurchgang strömenden Luft aufweist;
wobei in dem Luftzufuhrdurchgang das Luftzufuhrgebläse (73) stromab des Wärmetauschelements (61, 62) angeordnet ist; und
wobei in dem Luftabgabedurchgang das Luftabgabegebläse (74) stromab des Wärmetauschelements (61, 62) angeordnet ist.

11. Lüftungsvorrichtung nach Anspruch 10, **dadurch gekennzeichnet, dass** das Gehäuse (10) das Wärmetauschelement (61, 62) enthält, das aus einem ersten Wärmetauschelement (61) und einem zweiten Wärmetauschelement (62) besteht;
wobei in dem Gehäuse (10) ein dritter Durchgang (55a) so gebildet ist, dass er mit dem zweiten Durchgang (54a) überlappt; und
wobei der dritte Durchgang (55a) so ausgebildet ist, dass die Innenluft nach Durchgang durch das erste Wärmetauschelement (61), aber vor Eintritt in das zweite Wärmetauschelement (62) durch diesen hindurchströmt.

12. Lüftungsvorrichtung nach Anspruch 11, **dadurch gekennzeichnet, dass** die Richtung, in der die Außenluft durch den ersten Durchgang (52a) strömt, und die Richtung, in der die Innenluft durch den zweiten Durchgang (54a) strömt, einander entgegengesetzt sind.

## Revendications

1. Un dispositif de ventilation, comprenant :
un carter (10) dans lequel a été pratiqué un conduit de fourniture d'air assurant le raccordement entre une ouverture d'entrée extérieure (21) et une ouverture de fourniture d'air intérieur (23), et un conduit de refoulement d'air assurant le raccordement entre une ouverture d'entrée intérieure (22) et une ouverture intérieure de refoulement (24) de l'air; et
un échangeur de chaleur (61, 62), placé à l'intérieur du carter (10) et assurant un échange de chaleur entre l'air extérieur s'écoulant à travers le conduit de fourniture d'air et l'air intérieur s'écoulant dans le conduit de refoulement d'air;
l'ouverture d'entrée extérieure (21), l'ouverture de fourniture d'air intérieur (23), l'ouverture d'entrée intérieure (22) et l'ouverture intérieure de refoulement (24) de l'air étant pratiquées dans une section supérieure du carter (10),
**caractérisé en ce que** :
un premier conduit (52a) et un deuxième conduit (54a) sont pratiqués pour se chevaucher mutuellement le long d'une surface extérieure du carter (10), le premier conduit (52a) étant plus rapproché de la surface extérieure du carter, et le deuxième conduit (54a) étant plus rapproché d'un intérieur du carter,
le premier conduit (52a) étant situé en un point adjacent à la surface extérieure et en amont de l'échangeur de chaleur (61, 62), de sorte qu'avant son introduction dans l'échangeur de chaleur (61, 62), l'air extérieur le traverse ;
le deuxième conduit (54a) étant situé en un point adjacent au premier conduit (52a), mais non adjacent à la surface extérieure du carter, et le deuxième conduit (54a) étant situé en aval de l'échangeur de chaleur (61, 62), de sorte qu'après son passage dans l'échangeur de chaleur (61, 62), l'air intérieur le traverse.

2. Le dispositif de ventilation selon la revendication 1, l'ouverture d'entrée extérieure (21), l'ouverture de fourniture d'air intérieure (23), l'ouverture d'entrée intérieure (22) et l'ouverture intérieure de refoulement (24) étant pratiquées dans une surface supérieure du carter.

3. Le dispositif de ventilation selon la revendication 1 ou la revendication 2, dans lequel :
on permet la dépose, dans le carter (10), d'un panneau antérieur (12), pratiqué sur la face antérieure du carter (10) ; et
l'échangeur de chaleur (61, 62) est disposé de façon à permettre son exposition à l'extérieur du carter (10) lorsque l'on enlève le panneau antérieur (12).

4. Le dispositif de ventilation selon la revendication 1 ou la revendication 2, dans lequel :
le dispositif de ventilation comprend un filtre (71) recueillant des particules de poussière contenues dans l'air s'écoulant dans le conduit de fourniture d'air ou le conduit de refoulement d'air ;
de façon à permettre la dépose, dans le carter (10), d'un panneau antérieur (12), pratiqué sur la partie antérieure du carter (10) ; et
le filtre (71) est disposé de façon qu'il devienne exposé à l'extérieur du carter (10) lorsque l'on enlève le panneau antérieur (12).

5. Le dispositif de ventilation selon la revendication 4, dans lequel, à l'intérieur du conduit de fourniture d'air, le filtre (71) est disposé en amont de l'échangeur de chaleur (61, 62).

6. Le dispositif de ventilation selon la revendication 5,
l'échangeur de chaleur (61, 62) étant réalisé de telle façon que l'air contenu dans le conduit de fourniture d'air s'écoule vers le haut dans l'échangeur de chaleur (61, 62) ; et
le filtre (71) étant placé sous l'échangeur de chaleur (61).

7. Le dispositif de ventilation selon la revendication 1 ou la revendication 2,
le dispositif de ventilation comprenant un boîtier électrique (72) dans lequel sont contenus des composants électriques ;
de façon à permettre la dépose, dans le carter (10), d'un panneau antérieur (12), pratiqué sur la face antérieure du carter (10) ; et
le boîtier électrique (72) étant disposé de façon à être exposé à l'extérieur du carter (10) lorsque l'on a enlevé le panneau antérieur (12).

8. Le dispositif de ventilation selon la revendication 7, le boîtier électrique (72) étant monté dans la section supérieure du carter (10).

9. Le dispositif de ventilation selon la revendication 1 ou la revendication 2,
la ventilation comprenant un ventilateur de fourniture d'air (73) assurant le transport de l'air qui s'écoule dans le conduit de fourniture d'air, et un ventilateur de refoulement d'air (74) assurant le transport de l'air qui s'écoule dans le conduit de refoulement d'air ; et
le ventilateur de fourniture d'air (73) et le ventilateur de refoulement d'air (74) étant montés dans la partie supérieure du carter (10).

10. Le dispositif de ventilation selon la revendication 1 ou la revendication 2,
le dispositif de ventilation comprenant un ventilateur de fourniture d'air (73) assurant le transport de l'air qui s'écoule dans le conduit de fourniture d'air, et un ventilateur de refoulement d'air (74) assurant le transport de l'air qui s'écoule dans le conduit de refoulement d'air ; et,
dans le conduit de fourniture d'air, le ventilateur de fourniture d'air (73) étant placé en aval de l'échangeur de chaleur (61, 62) ; et,
dans le conduit de refoulement d'air, le ventilateur de refoulement d'air (74) étant placé en aval de l'échangeur de chaleur (61, 62).

11. Le dispositif de ventilation selon la revendication 10,
le carter (10) contenant l'échangeur de chaleur (61, 62), composé d'un premier échangeur de chaleur (61) et d'un deuxième échangeur de chaleur (62) ;
dans le carter (10), un troisième conduit (55a) est pratiqué afin de chevaucher le deuxième conduit (54a) ; et
le troisième conduit (55a) étant configuré de sorte qu'après son passage dans le premier échangeur de chaleur (61), mais avant son introduction dans le deuxième échangeur de chaleur (62), l'air intérieur le traverse.

12. Le dispositif de ventilation selon la revendication 11, la direction dans laquelle s'écoule l'air extérieur dans le premier conduit (52a) et la direction dans laquelle s'écoule l'air intérieur dans le deuxième conduit (54a) étant opposées l'une par rapport à l'autre.
